# EUROPÄISCHE PATENTSCHRIFT

(11) **EP 3 139 067 B1**
(45) Veröffentlichungstag und Bekanntmachung des Hinweises auf die Patenterteilung: **09.11.2022**
(21) Anmeldenummer: 15183921.4
(22) Anmeldetag: 04.09.2015
(51) Int. Cl.: F16H 57/033, B30B 15/00, F16H 1/28

(54) **PLANETENGETRIEBE**
PLANETARY GEAR UNIT
TRAIN EPICYCLOÏDAL

(43) Veröffentlichungstag der Anmeldung: 08.03.2017
(73) Patentinhaber: Desch Antriebstechnik GmbH & Co. KG, 59759 Arnsberg (DE)
(72) Erfinder: Wilmes, Markus, 59759 Arnsberg (DE)
(74) Vertreter: Schäperklaus, Jochen

(56) Entgegenhaltungen:
- EP-A2- 2 199 072
- DE-A1-102010 018 528
- DE-A1-102011 118 410
- DE-A1-102011 119 773
- US-A- 2 998 735

## Beschreibung

Die vorliegende Erfindung betrifft ein Verfahren zum Zusammenbau eines Systems gemäß dem Oberbegriff des Anspruchs 1. So ein Verfahren ist aus der DE102010018528A1 bekannt.

Planetengetriebe werden im Stand der Technik genutzt, um eine Antriebskraft von einem Antriebsmittel - wie beispielsweise einem Motor - zu einer Arbeitsmaschine - wie beispielsweise einer Presse - zu übertragen. Ein Vorteil von Planetengetrieben ist die besonders kompakte Bauweise und die hohe Belastbarkeit, sodass auch große Antriebskräfte übertragen werden können.

Bei bekannten Planetengetrieben kreisen Planetenzahnräder um ein Sonnenzahnrad. Jedes der Planetenzahnräder ist auf einer Planetenwelle drehbar gelagert. Die Planetenwelle ist an ihren beiden Enden mit einem Planetenträger verbunden. Der Planetenträger dient als Abtriebswelle und ist daher direkt mit der Arbeitsmaschine gekoppelt.

Bekannte Planetengetriebe werden als gesamtes einbaufertiges System an der Arbeitsmaschine montiert. Dies bedeutet einen relativ hohen Montageaufwand. Insbesondere die Demontage einzelner Komponenten ist durch bekannte Bauweisen relativ aufwändig, sodass die Wartung bekannter Planetengetriebe kompliziert ist.

Die DE 10 2011 119 773 A1 offenbart ein Planetengetriebe mit drei Modulen, die jeweils aus einer Menge von Modulen ausgewählt werden können, wobei die Module jeweils mit mehreren Schnittstellen kompatibel sind.

Die DE 10 2011 118 410 A1 offenbart ein hydromechanisches Getriebe mit einem durch eine Hydropumpe antreibbaren Hydromotor eines hydrostatischen Stufenlosgetriebes und einem an eine Triebwelle des Hydromotors angeschlossenen mechanischen Stufenschaltgetriebe, das durch eine Getriebeschalteinrichtung im Betrieb schaltbar ist.

Die EP 2 199 072 A2 offenbart einen Antriebsbaukasten zur Konstruktion einer Antriebseinrichtung für eine Arbeitsmaschine. Die Antriebskomponenten werden in alternativen Ausführungsformen hinsichtlich ihrer technischen Eigenschaften vorgesehen, wobei sie derart ausgestaltet sind, dass eine Antriebseinrichtung durch beliebige Kombination der Antriebskomponenten hergestellt werden kann.

Demgegenüber liegt der Erfindung die Aufgabe zugrunde, ein vereinfachtes Montageverfahren, ein leichter zu montierendes Planetengetriebe sowie ein System aus einem solchen Planetengetriebe und einer Presse zu schaffen.

Diese Aufgabe wird durch ein Verfahren gemäß Anspruch 1 gelöst. Ausführungsformen der Erfindung sind in den abhängigen Ansprüchen angegeben.

Das erfindungsgemäße Verfahren betrifft den Zusammenbau eines Systems, das ein Planetengetriebe und eine Arbeitsmaschine umfasst. Das Planetengetriebe umfasst ein erstes und ein zweites Modul. Das erste Modul umfasst mehrere Planetenzahnräder, mehrere Planetenwellen und zumindest einen Planetenträger. Das zweite Modul umfasst ein Hohlzahnrad oder ein Sonnenzahnrad. Das zweite Modul kann beispielsweise die übrigen Bauteile des Planetengetriebes umfassen. Die übrigen Bauteile können eine Antriebswelle, eine Kupplung, eine Bremse und/oder ein Schwungrad sein.

Zunächst wird das erste Modul an der Arbeitsmaschinenwelle lösbar befestigt. Dabei wird der Planetenträger lösbar an der Arbeitsmaschinenwelle kraftschlüssig oder formschlüssig befestigt. Unter einer lösbaren Befestigung wird dabei insbesondere eine Befestigung verstanden, die zerstörungsfrei gelöst werden kann. Dies kann bedeuten, dass beim Lösen der Befestigung weder die Arbeitsmaschinenwelle noch das erste Modul beschädigt und/oder in seiner Funktion beeinträchtigt wird. Es ist möglich, dass die lösbare Befestigung mehrmals durchgeführt und gelöst werden kann, ohne dass die Stabilität der Befestigung beeinträchtigt wird.

Nachdem das erste Modul an der Arbeitsmaschinenwelle lösbar befestigt worden ist, wird das erste Modul lösbar am zweiten Modul befestigt. Es ist insbesondere möglich, dass das erste Modul lösbar am Hohlzahnrad des zweiten Moduls befestigt wird. Diese Befestigung kann insbesondere formschlüssig sein. Beispielsweise kann eine Außenverzahnung der Planetenzahnräder in eine Innenverzahnung des Hohlzahnrads greifen. Diese formschlüssige Befestigung kann spielbehaftet sein.

Es ist möglich, dass das erste Modul an der Arbeitsmaschinenwelle derart befestigt wird, dass der Planetenträger fliegend an der Arbeitsmaschinenwelle gelagert ist. Außerdem ist es möglich, dass der Planetenträger einwangig ausgebildet ist. Darunter wird im Rahmen dieser Beschreibung insbesondere verstanden, dass die Planetenwellen jeweils nur an genau einem Ende der jeweiligen Planetenwelle mit dem Planetenträger verbunden sind.

Erfindungsgemäß ist vorgesehen, dass das Planetengetriebe ein erstes Modul und ein zweites Modul umfasst. Das erste Modul umfasst mehrere Planetenzahnräder, mehrere Planetenwellen und zumindest einen Planetenträger. Die Planetenzahnräder sind jeweils drehbar auf einer der Planetenwellen angeordnet. Die Planetenwellen sind jeweils an dem Planetenträger befestigt. Das zweite Modul umfasst ein Hohlzahnrad oder ein Sonnenzahnrad.

Erfindungsgemäß ist vorgesehen, dass der Planetenträger für eine lösbare Verbindung mit einer Arbeitsmaschinenwelle ausgebildet ist. Unter einer lösbaren Verbindung wird dabei insbesondere eine Verbindung verstanden, die zerstörungsfrei gelöst werden kann. Dies kann bedeuten, dass beim Lösen der Verbindung weder die Arbeitsmaschinenwelle noch der Planetenträger beschädigt und/oder in seiner Funktion beeinträchtigt wird. Als lösbare Verbindungen kommen insbesondere kraftschlüssige oder formschlüssige Verbindungen in Betracht. Es ist möglich, dass die lösbare Verbindung mehrmals hergestellt und gelöst werden kann, ohne dass die Stabilität der Verbindung beeinträchtigt wird.

Durch die lösbare Verbindung des Planetenträgers mit der Arbeitsmaschinenwelle wird die Montage des Planetengetriebes vereinfacht. Bei der Montage kann zunächst der Planetenträger mit den an ihm befestigten Planetenwellen und den Planetenzahnrädern als ein erstes Modul an der Arbeitsmaschinenwelle befestigt werden. Dies kann vorteilhafterweise am Einsatzort der Arbeitsmaschine erfolgen, da die Montage aufgrund der lösbaren Verbindung besonders einfach ist. Die übrigen Bauteile des Planetengetriebes können dann als ein zweites Modul am ersten Modul befestigt werden.

Der Planetenträger ist für eine formschlüssige oder kraftschlüssige Verbindung mit der Arbeitsmaschinenwelle ausgebildet. Unter der Arbeitsmaschinenwelle wird im Rahmen dieser Beschreibung insbesondere eine Welle der Arbeitsmaschine verstanden, die kraftschlüssig oder formschlüssig mit dem Planetenträger verbunden werden kann. Die Arbeitsmaschinenwelle kann beispielsweise eine Exzenterwelle sein. Dies kann insbesondere zutreffen, wenn die Arbeitsmaschine eine Presse ist.

Die Arbeitsmaschine ist als Presse ausgebildet. Die Verwendung des Planetengetriebes für eine Presse ist wegen der kompakten Bauweise besonders vorteilhaft.

Es ist möglich, dass das Planetengetriebe ein Hohlzahnrad und ein Sonnenzahnrad umfassen. Das Hohlzahnrad und die Planetenzahnräder können ineinander greifen und das Sonnenzahnrad und die Planetenzahnräder können ineinander greifen.

Das Planetengetriebe umfasst ein Gehäuse. Der Planetenträger ist teilweise außerhalb des Gehäuses angeordnet. Bevorzugterweise kann der Planetenträger größtenteils außerhalb des Gehäuses angeordnet sein. Dies kann insbesondere bedeuten, dass mehr als 50% oder mehr als 75%, insbesondere mehr als 90%, der Masse oder des Volumens des Planetenträgers außerhalb des Gehäuses angeordnet sind. Eine derartige Anordnung des Planetenträgers macht eine Montage und eine Wartung des Planetengetriebes besonders komfortabel.

Nach einer Ausführungsform der Erfindung können die Planetenwellen jeweils an genau einem Ende der jeweiligen Planetenwelle an dem Planetenträger befestigt sein. Unter einem Ende der Planetenwelle wird dabei insbesondere ein endseitiger Bereich der Planetenwelle verstanden, der ein Drittel oder ein Viertel so lang sein kann wie die gesamte Planetenwelle. Es ist insbesondere möglich, dass der Planetenträger in die Planetenwelle hineinragt. Alternativ kann die Planetenwelle in den Planetenträger hineinragen oder durch den Planetenträger hindurch ragen.

Es ist also möglich, dass der Planetenträger an nur genau einem Ende der jeweiligen Planetenwelle, und nicht an beiden Enden, befestigt ist. Dadurch wird eine kompaktere Bauweise ermöglicht, da kein Bauraum für die Befestigung am zweiten Ende der Planetenwelle benötigt wird. Insbesondere können derartige mehrstufige Planetengetriebe, beispielsweise mit einem Übersetzungsverhältnis von i ≥10, besonders kompakt und günstig gebaut werden. Außerdem wird die beim Betrieb des Planetengetriebes rotierende Masse reduziert, sodass der Planetenträger ein geringeres Trägheitsmoment aufweist, wodurch der Planetenträger bereits durch eine geringere Kraft oder in kürzerer Zeit beschleunigt und abgebremst werden kann. Da der Planetenträger lediglich an einem Ende der jeweiligen Planetenwelle befestigt ist, werden Montage- und Materialkosten eingespart. Außerdem wird die Montage des Planetengetriebes an der Arbeitsmaschine vereinfacht. Im Servicefall werden zudem der Zugang zum Planetengetriebe und die Demontage des Planetengetriebes vereinfacht.

Der Planetenträger kann eine Innenverzahnung aufweisen. Die Innenverzahnung kann dazu ausgebildet sein, in eine Außenverzahnung der Arbeitsmaschinenwelle zu greifen. Eine solche Befestigung des Planetenträgers an der Arbeitsmaschinenwelle ist insbesondere vorteilhaft, um im Betrieb am Planetenträger auftretende radiale Verlagerungen zu verringern. Die Verzahnungen weisen ein geringes Spiel auf, wie es bei Verzahnungen in der Praxis meistens unvermeidlich ist. Insbesondere wenn die Außen- und die Innenverzahnung mit einem Schmiermittel (z.B. Öl) geschmiert sind, werden auftretende Spannungsspitzen verringert.

Der Planetenträger kann ein Sicherungsmittel umfassen. Der Planetenträger kann durch das Sicherungsmittel gegen eine axiale Verschiebung relativ zur Arbeitsmaschinenwelle gesichert sein. Da das zweite Ende der Planetenwellen jeweils nicht mit dem Planetenträger verbunden ist, könnte sich ohne eine solche Sicherung der Planetenträger axial relativ zur Arbeitsmaschinenwelle verschieben und unter Umständen sogar von ihr herunterrutschen. Dies wird durch die Verwendung des Sicherungsmittels verhindert. Als Sicherungsmittel können beispielsweise Sicherungsringe verwendet werden.

Unabhängig davon, ob der Planetenträger formschlüssig oder kraftschlüssig an der Arbeitsmaschinenwelle befestigt werden kann, kann die Lagerung des Planetenträgers als fliegende Lagerung an der Exzenterwelle bezeichnet werden. Da der Planetenträger nur an genau einem Ende der Planetenwellen befestigt ist, erfolgt die Lagerung vorteilhafter Weise auf der Arbeitsmaschinenwelle.

Der Planetenträger kann ein Spannmittel umfassen. Das Spannmittel kann für eine Befestigung des Planetenträgers an der Arbeitsmaschinenwelle ausgebildet sein. Unter einem Spannmittel wird dabei insbesondere ein Mittel verstanden, das für eine Befestigung des Planetenträgers durch eine Spannkraft an der Antriebsmaschinenwelle ausgebildet ist. Dies ist eine besonders einfach zu montierende Art der Befestigung des Planetenträgers an der Arbeitsmaschinenwelle.

Das Spannmittel kann als Spannsatz ausgebildet sein. Die Verwendung eines Spannsatzes ermöglicht eine besonders sichere und einfach zu montierende Befestigung des Planetenträgers an der Arbeitsmaschinenwelle.

Das Ende der jeweiligen Planetenwelle kann, an dem der Planetenträger befestigt ist, im eingebauten Zustand des Planetengetriebes der Arbeitsmaschine zugewandt sein. Dies ist besonders vorteilhaft für eine kompakte Bauweise des Planetengetriebes.

Der Planetenträger kann als Abtriebswelle ausgebildet sein oder eine Abtriebswelle umfassen. Die Abtriebswelle ist dazu ausgebildet, die Antriebskraft auf die Arbeitsmaschine zu übertragen.

Ein System umfasst ein Antriebsmittel, eine Arbeitsmaschine, beispielsweise eine Presse, und ein Planetengetriebe. Das Planetengetriebe ist dazu ausgebildet, eine durch das Antriebsmittel bereitgestellte Leistung an die Arbeitsmaschine zu übertragen.

Der Planetenträger kann an der Arbeitsmaschinenwelle befestigt sein. Es ist insbesondere möglich, dass der Planetenträger drehbar an der Arbeitsmaschinenwelle gelagert ist.

Nach einer Ausführungsform der Erfindung kann das System eine Kupplung und eine Bremse, insbesondere eine Kupplungs-Brems-Kombination, umfassen.

Das System kann ein Schwungrad umfassen, das dazu ausgebildet ist, von dem Antriebsmittel angetrieben zu werden und die vom Antriebsmittel bereitgestellte Leistung an das Planetengetriebe zu übertragen. Insbesondere kann die Leistung über die Kupplung übertragen werden.

Es ist allerdings auch möglich, dass ein Planetengetriebe mit einem Motor, beispielsweise einem Servomotor, gekoppelt ist, dessen Kraft direkt auf die Eingangswelle des Planetengetriebes wirkt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische vereinfachte Schnittdarstellung eines Planetengetriebes aus dem Stand der Technik;
- Fig. 2: eine schematische Schnittzeichnung eines Planetengetriebes aus dem Stand der Technik;
- Fig. 3: eine schematische vereinfachte Schnittdarstellung eines Planetengetriebes;

- Fig. 4: eine schematische Schnittzeichnung eines Planetengetriebes; und
- Fig. 5: eine schematische Schnittzeichnung des Planetengetriebes aus Fig. 4 im teilweise demontierten Zustand.

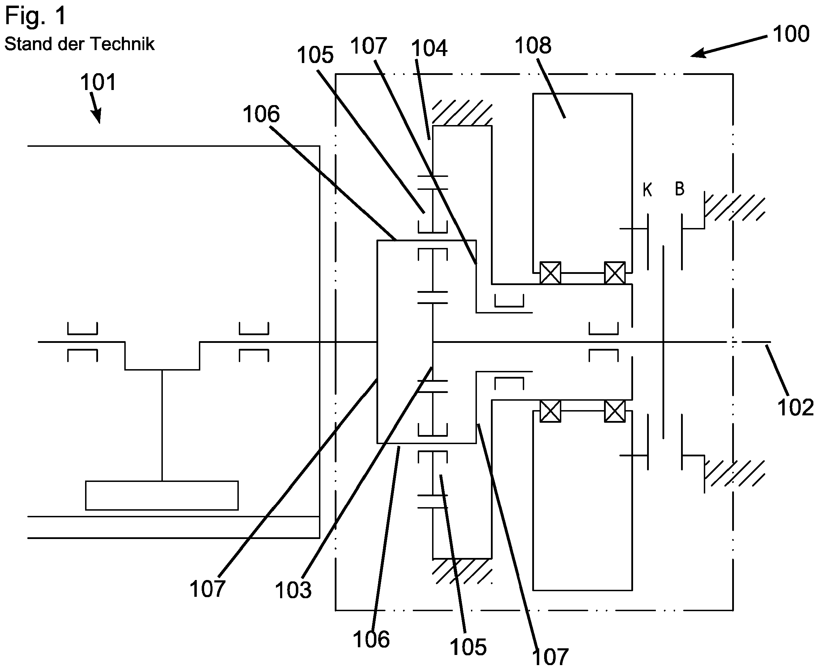

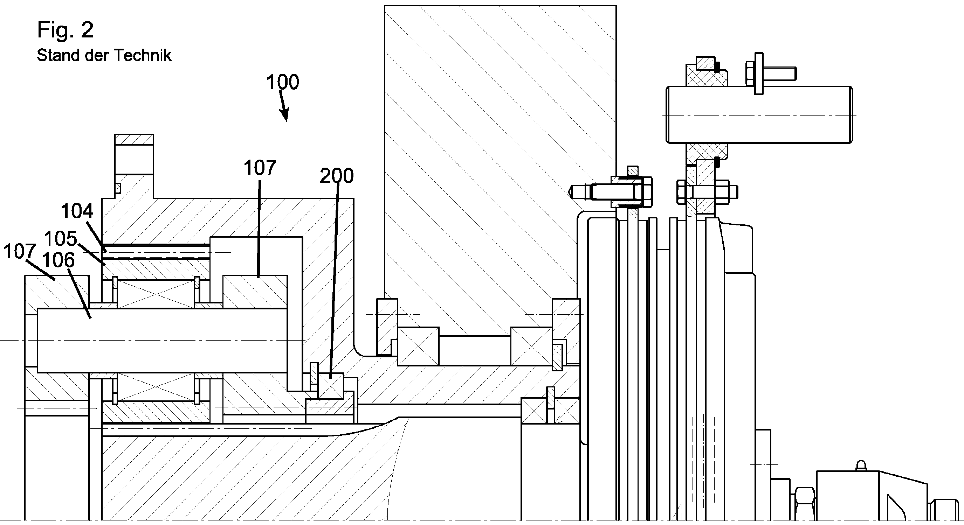

Das Planetengetriebe 100 aus dem Stand der Technik (siehe Figuren 1 und 2) dient zur Übertragung einer Antriebskraft an eine Arbeitsmaschine 101, die beispielsweise eine Presse sein kann. Das Planetengetriebe 100 umfasst ein Sonnenzahnrad 103, ein Hohlzahnrad 104, mehrere Planetenzahnräder 105, mehrere Planetenwellen 106 und einen Planetenträger 107. Die Planetenwellen 106 sind dabei an ihren beiden Enden (in Fig. 1 und Fig. 2 rechts und links) an dem Planetenträger 107 befestigt.

Über eine Antriebswelle 102 wird eine Antriebskraft von einem nicht dargestellten Antriebsmittel an das Sonnenzahnrad 103 übertragen, das in Eingriff mit den Planetenzahnrädern 105 steht. Es ist auch möglich, dass das Sonnenzahnrad 103 und die Antriebswelle 102 einteilig oder einstückig ausgebildet sind. Die Planetenzahnräder 105 stehen wiederum in Eingriff mit dem Hohlzahnrad 104. Bei Rotation des Sonnenzahnrads werden die Planetenzahnräder 105 in Rotation um die jeweilige Planetenwelle 106 versetzt. Aufgrund ihres Eingriffs mit dem Hohlzahnrad 104 und der Befestigung der Planetenwellen 106 an dem Planetenträger 107 rotiert dann der Planetenträger 107 koaxial zur Antriebswelle 102 und zum Sonnenzahnrad 103. Der Planetenträger 107 dient als Abtriebswelle des Planetengetriebes 100 und überträgt die Antriebskraft auf die Arbeitsmaschine 101.

Die Antriebswelle 102 kann über eine Kupplung K mit einem Schwungrad 108 verbunden werden, sodass eine von einem Motor erzeugte Antriebskraft über das Schwungrad 108 an die Antriebswelle 102 übertragen werden kann. Der Motor kann dabei insbesondere ein Synchronmotor (Servomotor) oder ein Asynchronmotor sein.

Das Planetengetriebe 100 umfasst außerdem ein Lagerungsmittel 200, das der Lagerung des Planetenträgers 107 dient.

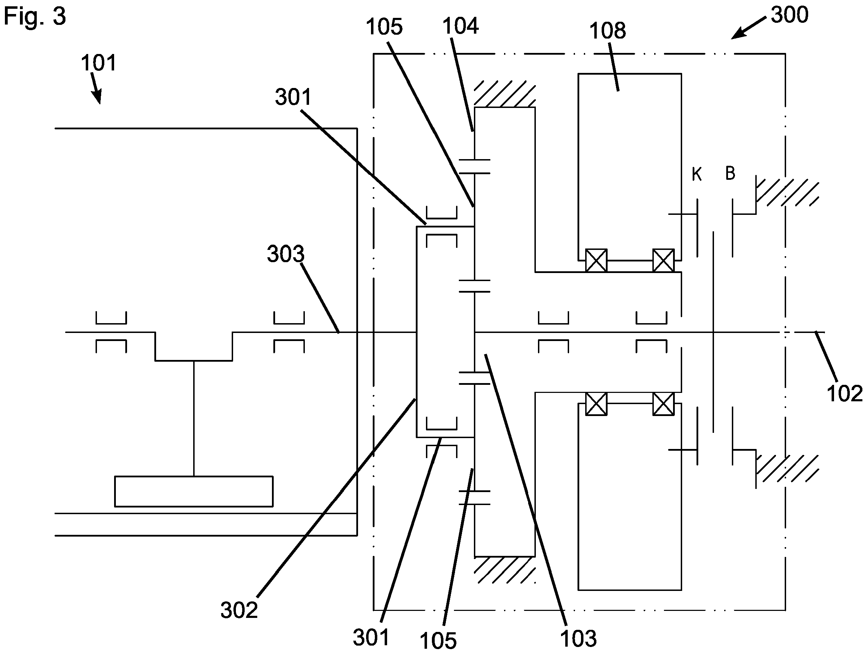

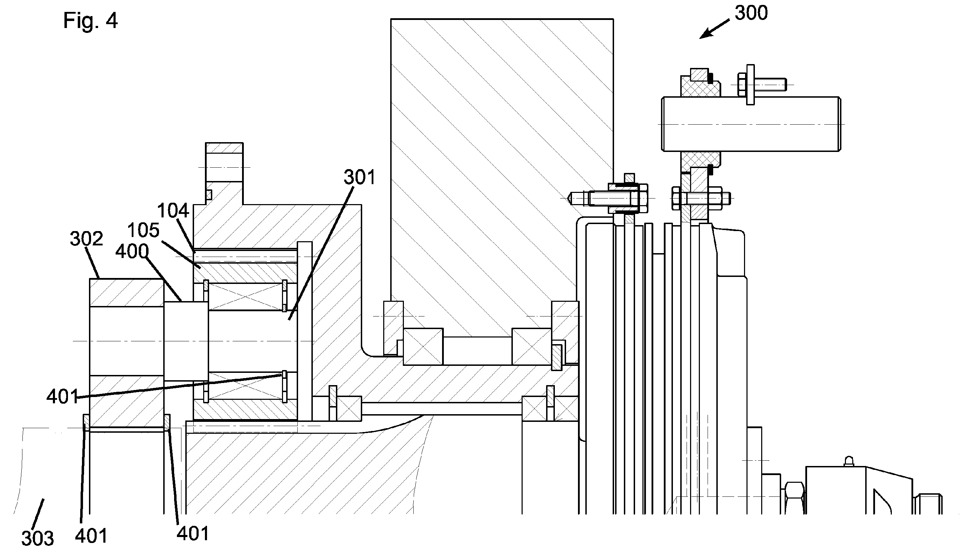

Zum Vergleich der in den Figuren 3 und 4 dargestellten Ausführungsformen der Erfindung mit dem Stand der Technik empfehlen sich ein Vergleich der Figur 3 mit der Figur 1 und ein Vergleich der Figur 4 mit der Figur 2.

Das in den Figuren 3 und 4 dargestellte Planetengetriebe 300 ist ähnlich aufgebaut wie das Planetengetriebe 100 aus den Figuren 1 und 2. Ein Unterschied besteht darin, dass das Planetengetriebe 300 Planetenwellen 301 anstatt der Planetenwellen 106 und einen Planetenträger 302 anstatt des Planetenträgers 107 umfasst. Ein besonderes Merkmal ist, dass die Planetenwellen 301 jeweils nur mit genau einem Ende 400 an dem Planetenträger 302 befestigt sind. Das dem Ende 400 gegenüberliegende Ende der Planetenwellen 301 liegt frei. Daher entfällt das Lagerungsmittel 200 beim Planetengetriebe 300. Der Planetenträger 302 ist somit frei fliegend auf der Arbeitsmaschinenwelle 303 gelagert.

Somit weist der Planetenträger 302 im Vergleich mit dem aus dem Stand der Technik bekannten Planetenträger 107 ein geringeres Gewicht auf. Dies ist insbesondere vorteilhaft, da das eingesparte Gewicht beim Planetenträger 107 bei einer Rotation sehr weit außen liegt. Daher ist das Trägheitsmoment des Planetenträgers 302 viel geringer als das Trägheitsmoment des bekannten Planetenträgers 107, was sich beispielsweise vorteilhaft in einer Bremswinkelreduzierung der Arbeitsmaschinenwelle 303 bemerkbar macht. Außerdem wird die Montage des Planetengetriebes 300 vereinfacht und Produktionskosten gesenkt.

Der Planetenträger 302 weist eine Innenverzahnung auf, die in Eingriff mit einer Außenverzahnung einer Arbeitsmaschinenwelle 303 der Arbeitsmaschine 101 steht. Hierdurch wird eine zuverlässige formschlüssige Befestigung erreicht. Außerdem wird durch ein geringes konstruktionsbedingtes Spiel der Verzahnung eine Verringerung von radialen Verlagerungen in dem Planetenträger 302 erreicht.

Zur Sicherung des Planetenträgers 302 gegen ein axiales Verschieben relativ zur Arbeitsmaschinenwelle 303 werden Sicherungsringe 401 verwendet. Der Planetenträger 302 ist somit auf der Arbeitsmaschinenwelle 303 fliegend gelagert. Im Vergleich mit dem aus dem Stand der Technik bekannten Planetenträger 107 (siehe Figuren 1 und 2) entfällt eine Lagerung des Planetenträgers 302 über das Lagerungsmittel 200.

In Figur 4 ist außerdem zu erkennen, dass der Planetenträger 302 außerhalb eines Gehäuses des Planetengetriebes 300 angeordnet ist, wodurch Montage und Wartung des Planetengetriebes 300 vereinfacht werden. Außerdem bilden die Planetenzahnräder 105, die Planetenwellen 301 und der Planetenträger 302 ein erstes Modul, das in den vom Hohlzahnrad 104 umgebenen Hohlraum eingesteckt werden kann. Im eingesteckten Zustand greift die Innenverzahnung des Hohlzahnrads 104 mit den Außenverzahnungen der Planetenzahnräder 105 ineinander, wodurch eine formschlüssige Verbindung erreicht wird.

Der Planetenträger 302 kann lösbar an der Arbeitsmaschinenwelle 303 befestigt werden. Hierdurch vereinfachen sich sowohl Montage als auch Demontage des Planetengetriebes. In einem ersten Schritt kann der Planetenträger 302 mit der daran befestigten Planetenwelle 106 und den Planetenzahnrädern 105 als ein erstes Modul lösbar an der Arbeitsmaschinenwelle befestigt werden. Anschließend können die übrigen Bauteile des Planetengetriebes 300 am ersten Modul befestigt werden. Diese modulare Bauweise vereinfacht insbesondere die Wartung des Planetengetriebes 300.

Das an der Arbeitsmaschinenwelle 303 befestigte erste Modul kann auf einfache Art und Weise dem Planetengetriebe 300 entnommen werden, da die formschlüssige Verbindung der Planetenzahnräder 105 mit dem Hohlzahnrad 104 lösbar ist. Montage, Wartung und Reparatur des Planetengetriebes 300 werden somit erheblich vereinfacht, da die Steckverbindung zwischen dem ersten Modul und dem Hohlzahnrad 104 ohne großen Aufwand gelöst werden kann.

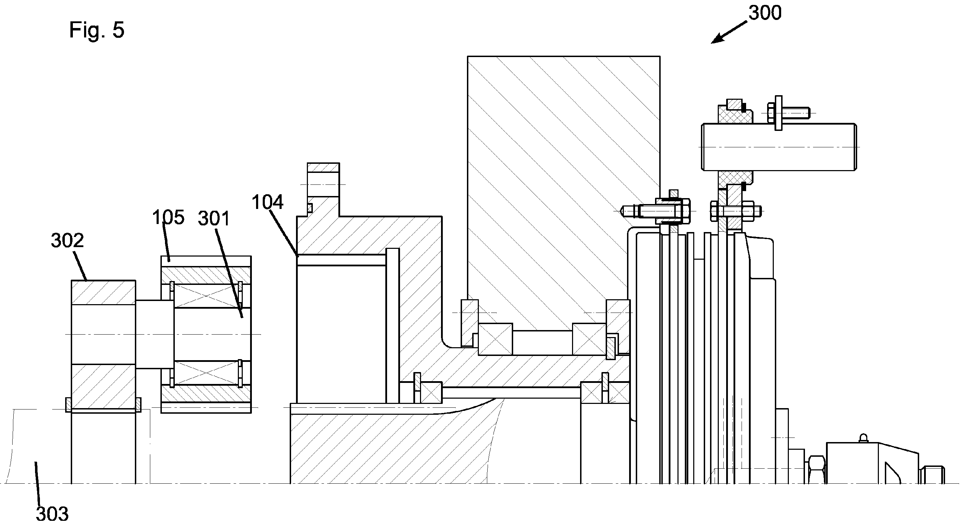

In Figur 5 ist das Planetengetriebe 300 in einem Zustand gezeigt, in dem die Verbindung zwischen der dem ersten Modul, das die Planetenzahnräder 105, die Planetenwellen 301 und den Planetenträger 302 umfasst, und dem Hohlzahnrad 104 gelöst ist. Das erste Modul lässt sich so leicht aus dem vom Hohlzahnrad 104 umgebenen Hohlraum entfernen. Da es sich bei der Verbindung zwischen dem ersten Modul und dem Hohlzahnrad 104 um eine Steckverbindung handelt, ist die Lösung der selbigen besonders einfach durchzuführen. Wartung, Reparatur, Montage und Demontage des ersten Moduls lassen sich so ohne großen Aufwand durchführen.

Das System aus Arbeitsmaschine und Planetengetriebe lässt sich in folgender Weise zusammenbauen. Zunächst werden die Planetenzahnräder 105, die Planetenwellen 301 und der Planetenträger 302 als erstes Modul zusammengebaut. Das erste Modul wird dann lösbar an der Arbeitsmaschinenwelle 303 lösbar befestigt. Anschließend wird das erste Modul an dem Hohlzahnrad 104 lösbar befestigt. Diese Montage ist besonders leicht durchzuführen, da das erste Modul einfach teilweise in den vom Hohlzahnrad 104 umgebenen Hohlraum eingeschoben werden kann und dort eine formschlüssige Verbindung mit dem Hohlzahnrad 104 ausbildet. Selbstverständlich kann alternativ auch das Hohlzahnrad 104 mit den daran befestigten übrigen Bauteilen des Planetengetriebes 300 über das erste Modul geschoben werden. Auch dann kann eine formschlüssige Verbindung zwischen dem ersten Modul und dem Hohlzahnrad 104 ausgebildet werden, indem die Außenverzahnungen der Planetenzahnräder 105 in die Innenverzahnung des Hohlzahnrads 104 greifen.

### Bezugszeichenliste

- 100: Planetengetriebe (Stand der Technik)
- 101: Arbeitsmaschine
- 102: Antriebswelle
- 103: Sonnenzahnrad
- 104: Hohlzahnrad
- 105: Planetenzahnrad
- 106: Planetenwelle
- 107: Planetenträger
- 108: Schwungrad
- 200: Lagerungsmittel
- 300: Planetengetriebe
- 301: Planetenwelle
- 302: Planetenträger
- 303: Arbeitsmaschinenwelle
- 400: Ende
- 401: Sicherungsring
- K: Kupplung
- B: Bremse

## Patentansprüche

1. Verfahren zum Zusammenbau eines Systems, wobei das System ein Planetengetriebe (300) und eine Arbeitsmaschine umfasst, wobei die Arbeitsmaschine eine Presse umfasst, wobei das Planetengetriebe (300) ein erstes Modul und ein zweites Modul umfasst, wobei das erste Modul mehrere Planetenzahnräder (105), mehrere Planetenwellen (301) und zumindest einen Planetenträger (302) umfasst, wobei das Planetengetriebe (300) ein Gehäuse umfasst, wobei der Planetenträger zumindest teilweise, bevorzugterweise größtenteils, außerhalb des Gehäuses angeordnet ist, wobei die Arbeitsmaschine eine Arbeitsmaschinenwelle (303) umfasst, wobei das zweite Modul ein Hohlzahnrad oder ein Sonnenzahnrad umfasst, **dadurch gekennzeichnet, dass** das Verfahren die folgenden Schritte umfasst:
- Lösbare Befestigung des ersten Moduls an der Arbeitsmaschinenwelle, wobei der Planetenträger kraftschlüssig oder formschlüssig an der Arbeitsmaschinenwelle befestigt wird; und daraufhin
- Lösbare Befestigung des ersten Moduls am zweiten Modul.

2. Verfahren nach dem vorherigen Anspruch, **dadurch gekennzeichnet, dass** die Planetenwellen (301) jeweils an genau einem Ende (400) der jeweiligen Planetenwelle (301) an dem Planetenträger (302) befestigt sind.

3. Verfahren nach zumindest einem der vorherigen Ansprüche, **dadurch gekennzeichnet, dass** der zumindest eine Planetenträger (302) eine Innenverzahnung aufweist, wobei die Innenverzahnung dazu ausgebildet ist, in eine Außenverzahnung der Arbeitsmaschinenwelle (303) zu greifen.

4. Verfahren nach zumindest einem der vorherigen Ansprüche, **dadurch gekennzeichnet, dass** das Planetengetriebe (300) ein Sicherungsmittel (401) umfasst, wobei der Planetenträger durch das Sicherungsmittel (401) gegen eine axiale Verschiebung relativ zur Arbeitsmaschinenwelle (303) gesichert ist.

5. Verfahren nach einem der vorherigen Ansprüche, **dadurch gekennzeichnet, dass** das Planetengetriebe (300) ein Spannmittel umfasst, wobei das Spannmittel für eine Befestigung des Planetenträgers (302) an der Arbeitsmaschinenwelle (303) ausgebildet ist.

6. Verfahren nach dem vorherigen Anspruch, **dadurch gekennzeichnet, dass** das Spannmittel als Spannsatz ausgebildet ist.

7. Verfahren nach zumindest einem der vorherigen Ansprüche, **dadurch gekennzeichnet, dass** das Ende (400) der jeweiligen Planetenwelle (301), an dem der Planetenträger (302) befestigt ist, im eingebauten Zustand der Arbeitsmaschine (101) zugewandt ist.

8. Verfahren nach zumindest einem der vorherigen Ansprüche, **dadurch gekennzeichnet, dass** der Planetenträger (301) als Abtriebswelle ausgebildet ist oder eine Abtriebswelle umfasst, wobei die Abtriebswelle dazu ausgebildet ist, die Antriebskraft auf die Arbeitsmaschine (101) zu übertragen.

## Claims

1. Method for constructing a system, wherein the system comprises a planetary gear unit (300) and a working machine, wherein the working machine comprises a press, wherein the planetary gear unit (300) comprises a first module and a second module, wherein the first module comprises several planetary gear wheels (105), several planetary shafts (301) and at least one planetary carrier (302), wherein the planetary gear unit (300) comprises a housing, wherein the planetary carrier is arranged at least partially, preferably predominantly, externally to the housing, wherein the working machine comprises a working machine shaft (303), wherein the second module comprises a ring gear or a sun wheel, **characterised in that** the method comprises the following steps:
- detachable fastening of the first module to the working machine shaft, wherein the planetary carrier is fastened in a non-positive or positive locking manner to the working machine shaft; and thereafter
- detachable fastening of the first module to the second module.

2. Method according to the previous claims, **characterised in that** the planetary shafts (301) are fastened respectively at precisely one end (400) of the respective planetary shaft (301) to the planetary carrier (302).

3. Method according to at least one of the preceding claims, **characterised in that** the at least one planetary carrier (302) has an internal toothing, wherein the internal toothing is configured to engage in an external toothing of the working machine shaft (303).

4. Method according to at least one of the preceding claims, **characterised in that** the planetary gear unit (300) comprises a securing means (401), wherein the planetary carrier is secured by the securing means (401) against an axial displacement relative to the working machine shaft (303).

5. Method according to any of the preceding claims, **characterised in that** the planetary gear unit (300) comprises a tensioning means, wherein the tensioning means is designed to fasten the planetary carrier (302) to the working machine shaft (303).

6. Method according to the preceding claims, **characterised in that** the tensioning means is in the form of a clamping set.

7. Method according to at least one of the preceding claims, **characterised in that**, in the installed state, the end (400) of the respective planetary shaft (301), to which the planetary carrier (302) is fastened, faces the working machine (101).

8. Method according to at least one of the preceding claims, **characterised in that** the planetary carrier (301) is designed as an output shaft or comprises an output shaft, wherein the output shaft is configured to transfer the drive force onto the working machine (101).

## Revendications

1. Procédé d'assemblage d'un système, dans lequel le système comporte un engrenage planétaire (300) et une machine de travail, dans lequel la machine de travail comporte une presse, dans lequel l'engrenage planétaire (300) comporte un premier module et un second module, dans lequel le premier module comporte plusieurs roues dentées planétaires (105), plusieurs arbres planétaires (301) et au moins un support planétaire (302), dans lequel l'engrenage planétaire (300) comporte un boîtier, dans lequel le support planétaire est agencé au moins partiellement, de préférence pour la plus grande partie, en dehors du boîtier, dans lequel la machine de travail comporte un arbre de machine de travail (303), dans lequel le second module comporte une roue dentée creuse ou une roue dentée solaire, **caractérisé en ce que** le procédé comporte les étapes suivantes :
- la fixation amovible du premier module à l'arbre de machine de travail, dans lequel le support planétaire est fixé à force ou par complémentarité de formes à l'arbre de machine de travail ; et sur ce
- la fixation amovible du premier module au second module.

2. Procédé selon la revendication précédente, **caractérisé en ce que** les arbres planétaires (301) sont fixés respectivement à précisément une extrémité (400) de l'arbre planétaire (301) respectif au support planétaire (302).

3. Procédé selon au moins l'une quelconque des revendications précédentes, **caractérisé en ce que** l'au moins un support planétaire (302) présente une denture intérieure, dans lequel la denture intérieure est réalisée afin de venir en prise dans une denture extérieure de l'arbre de machine de travail (303).

4. Procédé selon au moins l'une quelconque des revendications précédentes, **caractérisé en ce que** l'engrenage planétaire (300) comporte un moyen de protection (401), dans lequel le support planétaire est bloqué par le moyen de protection (401) contre un déplacement axial par rapport à l'arbre de machine de travail (303).

5. Procédé selon l'une quelconque des revendications précédentes, **caractérisé en ce que** l'engrenage planétaire (300) comporte un moyen de serrage, dans lequel le moyen de serrage est réalisé pour une fixation du support planétaire (302) à l'arbre de machine de travail (303).

6. Procédé selon la revendication précédente, **caractérisé en ce que** le moyen de serrage est réalisé comme ensemble de serrage.

7. Procédé selon au moins l'une quelconque des revendications précédentes, **caractérisé en ce que** l'extrémité (400) de l'arbre planétaire (301) respectif, à laquelle est fixé le support planétaire (302), est tournée dans l'état installé vers la machine de travail (101).

8. Procédé selon au moins l'une quelconque des revendications précédentes, **caractérisé en ce que** le support planétaire (301) est réalisé comme arbre de sortie ou comporte un arbre de sortie, dans lequel l'arbre de sortie est réalisé afin de transmettre la force d'entraînement à la machine de travail (101).
